**Europäisches Patentamt**

**(19)** **European Patent Office**

**Office européen des brevets**

**(11)** Publication number : **0 550 591 B1**

**(12)** # EUROPEAN PATENT SPECIFICATION

**(45)** Date of publication of patent specification :
**17.08.94 Bulletin 94/33**

**(51)** Int. Cl.$^5$: **C09D 5/08,** C09D 195/00, F16L 58/12

**(21)** Application number : **91917389.8**

**(22)** Date of filing : **27.09.91**

**(86)** International application number :
**PCT/DK91/00292**

**(87)** International publication number :
**WO 92/06141 16.04.92 Gazette 92/09**

**(54) A METHOD OF PROTECTING MATERIALS AGAINST CORROSION AS WELL AS AN APPARATUS FOR CARRYING OUT THE METHOD.**

**(30)** Priority : **28.09.90 DK 2357/90**

**(43)** Date of publication of application :
**14.07.93 Bulletin 93/28**

**(45)** Publication of the grant of the patent :
**17.08.94 Bulletin 94/33**

**(84)** Designated Contracting States :
**DE GB NL**

**(56)** References cited :
**EP-A- 0 354 510**
**DE-B- 2 714 138**
**GB-A- 1 538 267**
**US-A- 4 133 352**
**US-A- 4 381 726**

**(73)** Proprietor : **A/S PHONIX CONTRACTORS**
**Vester Allé 1**
**DK-6600 Vejen (DK)**

**(72)** Inventor : **JOERGENSEN, Erik Vagn**
**Rugvaenget 9**
**DK-6600 Vejen (DK)**
Inventor : **STOVGAARD, Keld**
**Morbaervej 108**
**DK-6600 Vejen (DK)**
Inventor : **LÜTZEN, Carsten**
**Egevaenget 39, Askov**
**DK-6600 Vejen (DK)**
Inventor : **JOERGENSEN, Hans Erik**
**Ejstrupvej 1**
**DK-6000 Kolding (DK)**

**(74)** Representative : **Zeuthen-Aagaard, Henrik et al**
**Chas. Hude,**
**33 H.C. Andersens Boulevard**
**DK-1553 Copenhagen V (DK)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 550 591 B1

## Description

### Technical Field

The present invention relates to a method of protecting materials against corrosion including the steps of priming with a primer, coating with a modified bitumen enamel, wrapping in a wrapping material and optionally applying a concrete coating, and an apparatus for carrying out the method.

The method according to the invention ensures an improvement of the conventional protection of materials against corrosion, such as for instance pipes to be used both offshore and onshore. The conventional method of protecting for instance pipes against corrosion starts with priming with a primer followed by application of a bitumen enamel or a tar enamel, one or more layers of wrapping material simultaneously being applied to the liquid enamel. The conventional method is terminated by application of an additional layer of wrapping material. In connection with pipes to be used offshore, a concrete coating is finally applied for protection of the pipe and for counter-acting buoyancy, especially when said pipe is empty.

### Background Art

Examples of bitumen enamels and suited primers to be used in combination therewith are described in "Specification for Bitumen-based Hot-applied Coating Materials for Protecting Iron and Steel, Including Suitable Primers Where Required", BS 4147: 1980 by British Standards Institution, said matter hereby being incorporated in the present specification. The same applies to examples of tar enamels and suited primers described in "Specification for Coal-Tar-Based Hot-applied Coating Materials for Protecting Iron and Steel, Including Suitable Primers Where Required", BS 4164; 1980, also by British Standards Institution.

Tar enamels, such as for instance coal tar enamel, are old and well-known pipe coating materials possessing several excellent properties, inter alia an outstanding protecting effect against corrosion. However, the material is gradually growing outdated partly due to its environmental drawbacks and partly due to the difficulty of providing the raw materials of the correct quality. In addition, the use of tar enamel is encumbered with drawbacks relating to the production thereof because the properties of the tar enamel may change during the production which involves repeated return pumpings, reheatings and flood coatings, where it cannot be avoided that some of the ingredients of the enamel evaporate.

A typical tar enamel to be used for protection against corrosion contains tar of the quality 105/15, 105/8 or 120/5 according to BS 4164: 1980 in a quantity of 65 to 75% by weight together with filler in a quantity of 25 to 35% by weight.

Bitumen enamels are well-known and appreciated pipe coating materials presently used to an increasing extent instead of coal tar enamel. Most of the pipelines for oil and gas in the North Sea are coated with bitumen enamels. The material is often recommended, but has also been criticized for instance due to poor bitumen quality in connection with the oil crisis in 1972 to 1973. It is of vital importance that the correct bitumen quality is used, such as for instance oxidized bitumen 115/15, and that the supplies are reliable.

A typical conventional bitumen enamel to be used for protection against corrosion contains bitumen of the quality 115/15 according to BS 4147: 1980 in a quantity of 65 to 75% by weight together with 25 to 35% by weight of filler, most typically approximately 70% by weight of bitumen and 30% by weight of filler. The addition of filler is usually determined by the melting point of the bitumen used. A conventional bitumen enamel is heated to 220 to 230°C while being stirred and applied in a layer of a thickness of 5 to 7 mm.

GB-PS No. 1538267 discloses a process for coating a pipe comprising applying to the pipe a bituminous composition comprising from 80 to 99% by weight of bitumen and from 1 to 20% by weight of a block polymer having the general configurtaion:

$$A - B - ( - B - A)_n$$

wherein each A is a thermoplastic polymer block of a monovinyl aromatic hydrocarbon or a 1-alkene, B is an elastomeric polymer block of a conjugated diene or more than one 1-alkene, and n is an integer or a hydrogenated derivative of the block copolymer.

However the above coating process has not yet been accepted for industrial use due to insufficient bonding of the bituminous composition to the pipe.

It is also known to use plastic materials, such as fusion-bond, i.e. melt/sinter-bond, epoxy (FBE) and polyethylene (PE) for the protection of materials, such as pipes, against corrosion. These relatively new synthetic products require, however, a very expensive equipment for the application. In addition, it is difficult to achieve suficiently good corrosion protecting properties like the ones measured by way of cathodic disbonding when fusion-bond epoxy/polyurethane or polyethylene is used for the coating. Moreover, fusion-bond epoxy and the like materials are mechanically vulnerable and are easily damaged during storage, transport and handling.

Problems apply furthermore to polyethylene concerning the adhering thereof to the base layer, and such problems often result in discarding.

Disclosure of the Invention

The object of the present invention is to provide a method of protecting corrosive materials against corrosion while achieving a good and durable corrosion protection, and where the method can simultaneously be carried out in a relatively simple manner without involving a considerable loss of the enamel material used and under conditions less damaging to the environment than the conditions usually applying in connection with coating with bitumen enamel or tar enamel.

The method according to the invention is characterised by priming with a primer containing 3 to 20% by weight of phenol modified resin and 0.1 to 5% by weight of silane, and by using as bitumen enamel a bitumen being modified with one or more polymers selected among vinyl-butadiene block polymers optionally combined with polyolefines in a total polymer quantity of 6 to 18% by weight calculated on the total quantity of bitumen and polymer.

The method according to the invention turned out to provide a protection against corrosion which resulted in outstanding strength properties against both impacts, bumps and bendings within a large temperature range. The protection against corrosion according to the invention ensures furthermore a particularly good bond to the base layer. In addition, the corrosion-protecting properties measured at the test for cathodic disbonding turned out to be surprisingly superior to those measured in connection with the use of coal tar enamel and the remaining known corrosion-protecting coatings. The test for cathodic disbonding has been described in greater detail in BS 4164: 1980 (British Standards Institution); Appendix N "Cathodic Disbonding Test". According to the test, a specific area of the corrosion-protected material is uncovered and the material is placed in an electrolytic bath with sodium chloride and subjected to a predetermined voltage for a predetermined period of time. Subsequently, the size of the portion presenting a disbond corrosion-protection coating is measured.

Unlike the results observed in connection with the use of conventional coal tar enamel or bitumen enamel for for instance corrosion-protection of pipes, superior properties are obtained at elevated temperatures. The latter is both highly surprising and particularly advantageous in connection with for instance transport of crude oil, where it is now possible to operate at the maximum temperature, such as 70 to 80°C, which facilitates the transport of crude oil through the pipes.

According to the conventional procedure for applying usual enamels of coal tar or bitumen, the enamel material is applied in form of a liquid carpet onto a length of 0.5 to 2 m of the rotating pipe from a channel-shaped open drawer with openings or a slot in the bottom. The wrapping material is applied through the above liquid carpet, and the rotating of the pipe during the advancing of the material results in an alternating layer of enamel and wrapping material, an outer layer of wrapping material terminating the process. The rheological properties of the conventional enamel materials are, however, such that the enamel material must be applied in form of an excess material, and a high excess must be collected in a reservoir therebelow, pumped back, reheated, and pumped into the drawer again. Such a technique involves a waste of material, decomposition of said material as well as a high consumption of energy. Persons skilled in the art call the application method used "flood coating". By the known technique, the wrapping material is applied immediately after application of the enamel material. Usually it is necessary to use at least two lengths of wrapping material layered atop one another, such as with one or two inner layers of a weigth of 50 to 60 g/m² and a terminating outer layer of a weight of 200 to 800 g/m².

The use of a modified bitumen enamel of the type mentioned in claim 1 renders it possible to carry out the application such that the exact desired or necessary quantity of enamel is applied in a single operation. Such an application involves a considerably reduced formation of fumes and less environmental damages compared to the known flood-coating process. In other words, no reservoir and no system for returning and reheating purposes are necessary.

According to a particular embodiment for protecting pipes against corrosion, the method according to the invention is characterised by applying the bitumen enamel from a channel-shaped closed container with one or more aligned holes placed above and parallel to the rotating pipe, said pipe being advanced in its axial direction, where a substantially constant overpressure is kept inside the container as well as a substantially constant temperature adapted to the temperature of the pipe in such a manner that the bitumen enamel upon contact with the pipe hardens to such an extent that the entire quantity of bitumen enamel bonds to the pipe.

The application of modified bitumen enamel may by the method according to the invention advantageously be carried out by means of an apparatus characterised by comprising a channel-shaped closed container with one or more aligned holes, said channel-shaped container forming part of a circuit including in the flow direction after the container a first pump, a reservoir tank with a stirrer and a heating unit, and a second pump, where the second pump pumping bitumen into the container and the first pump pumping bitumen out of said container are mutually controlled in such a manner that the pressure inside the container is kept substantially constant. Such an apparatus is a modification of an apparatus developed for laying stripe material on a solid base layer, such as for instance traffic marking, said apparatus being described in Danish Patent Specification No. 146,517 corresponding to US Patent Specification No. 4,381,726. The modification of the apparatus ensures that a substantially constant pressure applies inside the closed container irrespective of whether bitumen enamel is pumped through the slot or said slot is closed. The latter is ensured by means of two pumps, i.e. one pump before and one pump after the closed container. The two pumps are mutually controlled on the basis of the pressure inside the container. The slot is usually of a length of up to 0.5 m, i.e. usually shorter than the conventional open drawers. The length of the slot is usually adjusted such that it mates the width of the length of wrapping material.

A particularly suited bitumen enamel to be used by the method according to the invention is modified with 4 to 12% by weight of vinyl-butadiene block polymer and 2 to 6% by weight of polyolefin calculated on the total quantity of bitumen and polymer.

The vinyl-butadiene block polymer is preferably a mixture of linear and branched vinyl-butadiene block polymers in the ratio 0.7:1 to 3:1. Such a combination ensures a good heat stability and a good cold flexibility for substantially lower viscosities compared to the results obtained by means of linear polymer alone.

By the method according to the invention it is particularly advantageous to use a wrapping material based on a combination of a layer of polyester felt and a layer of polyester tissue, where the felt side faces the material to be protected against corrosion.

The extent of applicability of the invention appears from the following detailed specification. It should, however, be understood that the detailed specification and the specific examples are merely included to illustrate the preferred embodiments, and that various alterations and modifications within the scope of protection will be obvious to persons skilled in the art on the basis of the detailed specification.

Best Mode for Carrying Out the Invention

In order to ensure the bonding of the modified bitumen material used by the method according to the invention, the present invention also covers development of a new priming system, which at the same time provides both superior bonding properties, cathodic disbonding properties and resistance to impacts.

The primer used according to the invention contains 3 to 20% by weight of phenol-modified resin, and 0.1 to 5% by weight of silane, preferably 6 to 18% weight and 0.4 to 2% by weight, respectively, and particularly preferred 10 to 16% by weight and 0.5 to 1.2% by weight, respectively.

Examples of suited phenol-modified resins are for instance resins with softening points according the ball-and-ring method of between 80 and 165°C. Among the latter resins, particularly suited resins are for instance terpene phenolic resin or t-butyl phenolic resin with a softening point according to the ball-and-ring method of between 80 and 150°C.

Terpene phenolic resins and t-butyl phenolic resins with a softening point according to the ball-and-ring method in the range of from 80°C to 150°C turned out to be suited. A preferred range of the softening point is 90 to 120°C, particularly preferred 90 to 100°C.

The silane used in the primer may for instance be selected among organosilanes and oligomer silanes of a chain length of from 2 to 10 monomer molecules or the corresponding zirconium or titanium compounds.

Particularly suited silanes include amino, mercapto, glycidyloxy, cyclohexenyl, chloro, methacrylic, vinyl, arylvinyl, alkylvinyl, methacryloxy, alkyl-alkoxy silanes and oligomers thereof.

As particularly suited silanes gamma-mercaptopropyltrimethoxy silane and gamma-methacryloxypropyltrimethoxy silane can be mentioned.

In addition to the phenol-modified resin and the silane, the primer usually contains further conventional ingredients, such as binder based on polymerized and chlorinated isoprene elastomers, solvents, such as aliphatic and aromatic hydrocarbons and chlorinated hydrocarbons, esters and ketones or mixtures thereof, as well as a possible pigmentation, such as carbon black.

Conventionally used primers usually contain a chlorinated rubber, plasticizer, solvent, and optionally a pigment. A typical composition of a primer to be used in connection with a conventional bitumen enamel is a primer containing 20 to 30% by weight, such as approximately 25% by weight of chlorinated caoutchouc for instance of an average molar weight of approximately 85,000, 3 to 8%, for instance 5% by weight of plasticizer for instance chloroparaffin, 1 to 3%, for instance approximately 0.5%, by weight of carbon black, as well as 20 to 80% by weight of solvent for instance approximately 50% by weight of xylene and approximately 20% by weight of methylenechloride.

The use of such a conventional primer turned out to result in a quite insufficient bond to the modified bitumen enamels presented by the invention which possess high strength, heat stabilities and further properties. Thus the use of conventional primers in combination with the particular bitumen enamel provided by the invention would result in a much too poor peeling resistance and on a long view insufficient cathodic disbonding properties.

A combination of silanes and phenol-modified resins turned out to provide not only a superior peeling resistance and a superior, i.e. reduced, cathodic disbonding, but also superior impact resistance properties. In addition it turned out that the latter properties can be further improved because the viscosity-reducing properties of the phenol-modified resins allow the use of high-molecular binders such as a stabilized chloroprene polymer, chloroprenevinyl copolymer, chloropreneacryl copolymer or chloroprenemethacryl copolymer. Thus the particularly developed primer renders it possible to completely utilize the properties of the particularly developed polymer-modified bitumen enamels.

A particularly suited primer to be used by the method according to the invention contains thus

2 to 8% by weight of polychloroprene
2 to 8% by weight of chlorinated rubber
3 to 20% by weight of terpene phenolic resin
0.1 to 5% by weight of mercaptosilane
0 to 5% by weight of carbon black
20 to 80% by weight of hydrocarbon-based solvent
10 to 30% by weight of chlorinated hydrocarbons.

It is known to modify bitumens with polymer products, such as for instance SBR, SBS, SIS, SIBS, SIRS, APP and other polyolefines to achieve improved heat-stability properties, optionally combined with a high cold-flexibility. However, usually problems arise in connection with considerably higher viscosities or temperatures, and difficulties apply to making the products bond to the layers onto which they are applied.

A primary object of the invention is to obtain both a good thermal stability measured by sag properties (sag properties, BS 4164: 1980, Appendix H or BS 4147: 1980, Appendix E) and good strengh and viscosity in cold.

It turned out that a combination of linear and branched styrene-butadiene-styrene block copolymers (SBS) provides a good bond to the base layer at the same time as good impact resistance properties and sag properties are obtained. It is furthermore possible at the same time to use a polyolefin polymer, such as for instance amorphous polyolefines produced by the low pressure method, or styrene-ethylene-butadiene-styrene block coplymers (SEBS), to obtain a reduction of too high application viscosities with the result that an acceptable level is achieved without affecting the desired good sag properties and impact resistance properties. Usually it is very difficult to obtain a corrosion protection by means of a bitumen enamel on the same level as the one obtained by the use of coal tar enamel, even when polymer-modified enamel is used. However, it turned out that the above strongly branched SBS-polymer products, i.e. styrene-butadiene-styrene copolymer, allow achievement of surprisingly good properties, which in addition improve at high application temperatures where a reduction is usually observed. Bending tests on pipes protected against corrosion by the method according to the invention revealed that said pipes were far superior to pipes protected by the previously known systems, especially at low temperatures where exactly the bending test is critical and of particular importance.

For the modification of the bitumen enamel according to the invention a polymer can be used which is selected among styrene-butadiene-styrene, styrene-isoprene-styrene, styrene-isoprene-butadiene-styrene, and styrene-ethylene-butadiene-styrene, all in form of block copolymers. Such block copolymers provide good strength properties and corrosion protecting properties. They are usually combined with atactic polypropylene APP or other polyolefines and/or styrene-ethylene-butadiene-styrene polymer to achieve acceptable application viscosities.

Particularly suited polymers include styrene-butadienestyrene block copolymers in form of a combination of a linear block copolymer of a molecular weight in the range of from 60,000 to 170,000 and branched copolymers of a molecular weight in the range of from 250,000 to 450,000, as the latter turned out to provide particularly good properties. When it is necessary to adjust the application viscosity and the application temperature to an acceptable level, it is possible simultaneously to use polyolefin polymers and polyolefin copolymers without involving a negative effect on the corrosion protection.

As particularly suited polymers should be mentioned linear SBS-block copolymers of an average molecular weight of from 70,000 to 170,000 combined with strongly branched SBS-block copolymers of an average molecular weight of from 300,000 to 450,000, where the adjustment of the viscosity at the used application temperature is typically performed by means of polyolefin copolymers or APP with softening points according to the ball-and-ring method of between 50 and 150°C, preferably between 100 and 130°C. Polymers of ball-and-ring values between 110 and 130°C turned out to be particularly suited.

The quantity of polymer in the bitumen enamel amounts to 6 to 18% by weight, more preferred 7 to 16% by weight, and most preferred 8 to 14% by weight calculated on the total quantity of bitumen and polymer.

Beyond the above styrene-butadiene copolymers, corresponding polymers can also be used, said polymers being produced from monomers at least containing one or more other elements, such as oxygen, in addition to carbon and hydrogen. Examples of such polymers are ethylene-vinylacetate copolymers, ethylene-ethylacrylate copolymers and ethylene-n-butylacrylate copolymers. A class of suitable vinyl-butadiene block copolymers include such block copolymers of the general formula

$$A - B - (B - A)_n$$

where A represents a thermoplastic polymer block of a monovinyl-aromatic hydrocarbon or a 1-alkene, and B is an elastomeric polymer block of conjugated diene or more than one 1-alkene, and n is an integer, preferably from 1 to 5 or optionally a partially hydrogenated derivative thereof. The polymer blocks A are preferably of an average molecular weight in the range of from 2,000 to 100,000, especially from 7,500 to 50,000. The polymer blocks B are preferably of an average molecular weight in the range of from 25,000 to 1,000,000, especially from 35,000 to 200,000. When two or more blocks B are immediately neighboring according to the branched configuration, they are considered a single block as far as the molecular weight is concerned. The quantity of polymer blocks A in the block copolymers is preferably in the range of from 10 to 70% by weight, especially from 20 to 50% by weight. Suited examples of block copolymers are for instance polystyrene-polyisoprenepolystyrene, polystyrene-polybutadiene-polystyrene, polyethylene-(ethylene-propylene-copolymer)-polyethylene, polypropylene-(ethylene-prolypene-copolymer)-polypropylene and hydrogenated derivatives thereof.

The bitumen used as starting material may be any conventional bitumen, especially such bitumens with penetration values between 5 and 500, and preferably between 20 and 80. Particularly suited bitumens turned out to have a penetration value of from 50 to 80.

In addition to bitumen and polymer, the used bitumen enamel can also include conventional ingredients, such as for instance inactive fillers, such as talc powder, slate powder or quartz powder.

Particularly suited modified bitumen enamel materials have therefore the following composition:

| | |
|---|---|
| 50 to 80% | by weight of bitumen, penetration value 70 |
| 1 to 14% | by weight of linear SBS-block polymer, typical average molecular weight of approximately 100,000 |
| 1 to 10% | by weight of branched SBS-block polymer, typical average molecular weight of approximately 350,000 |
| 1 to 8% | by weight of amorphous polyolefin, ball-and-ring value 110 to 130°C |
| 15 to 40% | by weight of filler, such as slate powder. |

Conventional wrapping materials are usually of glass felt and/or glass tissue. Such materials can in principle also be used by the method according to the invention. In connection with the development of the method according to the invention, particularly suited wrapping materials have, however, been developed, said materials being based on a polymeric material formed by a combination of felt and tissue. Suitable wrapping materials are polyester aramide, polyamide or kevlar or carbon fibres. The wrapping material uses as binder a modified bitumen providing said wrapping material with a particularly good compatibility with the bitumen enamel. The wrapping material operates as a reinforcement material which does not break at pipe bending during the laying out of pipes. The strong bond of the modified bitumen enamel used by the method according to the invention implies that it is only necessary to use one layer of wrapping material, where the known technique usually uses at least two layers of wrapping material. The use of the above newly developed wrapping material renders it possible by the method according to the invention to obtain excellent strengths and resistance to damages arising during the handling, transport and storage. In addition, good bending properties are obtained during the laying out at low temperatures. Compared to the previously used glass tissue or glass felt reinforced systems, the newly developed wrapping materials ensure that the good properties of the used bitumen enamel can be completely utilized with respect to flexibility.

By the method according to the invention, the primer is applied in a conventional manner, preferably by the so-called airless spraying. Subsequently, the primer must dry before the modified bitumen enamel is applied.

After the priming, the bitumen enamel is advantageously applied by means of a modification of an apparatus shaped to apply traffic marking on asphalt, said apparatus being described in Danish Patent Specification No. 146,517 corresponding to US Patent Specification No. 4,381,726. By the modified apparatus, the bitumen enamel material is applied at a temperature of 180 to 200°C from a channel-shaped closed container through a slot. The slot is placed parallel to the axis on a pipe to be coated, and the bitumen enamel material is applied while the pipe is rotating. Immediately after the application of the bitumen enamel material, the wrapping material is applied in form of a continuous length. As a consequence of the good inner bond and form stability of the bitumen enamel material and as a consequence of the exactly adjusted temperature, the bitumen enamel material hardens so quick on the surface of the pipe that the entire quantity of applied bitumen enamel material is fixed on the pipe. Unlike the previously used technique, no excess of enamel material remains to be collected in a reservoir therebelow, pumped back, reheated and reused. When it is a question of corrosion-protecting pipes to be used offshore, the material is subsequently coated with a concrete coating protecting the pipe against physical effects and counter-acting buoyancy.

The method according to the invention is suited for protecting any type of corrosive material against corrosion, such as for instance iron, steel and other metals and alloys as well as concrete.

Examples of materials where the method according to the invention is suited are steel pipes to be used as pipelines for oil or gas. Such steel pipes are usually of a length of 12 m, a diameter of 50 to 100 cm, and a thickness of 15 to 25 mm. In connection with coating of steel pipes, primers are usually used in a quantity of one liter per approximately 10 m2, which usually results in a dry film of a thickness of 20 to 30 micrometer. Subsequently, the bitumen enamel is applied usually in a thickness of 3 to 5 mm, i.e. in a thinner layer than the conventionally used layer of 5,7 mm. A particular wrapping material is used as wrapping material, said material being produced by a combination of polyester felt and polyester netting, the felt and the netting optionally being joined by way of lamination coating. Such a wrapping material is placed with the felt side facing the bitumen enamel in order to ensure that said enamel is retained in its position. The outer nettings provide a good base layer when the material subsequently is to be wrapped in concrete. The used wrapping material is usually of a weight of 400 to 800 g/m2.

## Example 1

A primer according to the invention is produced in a manner known per se, but with the following ingredients

### Primer

| | |
|---|---|
| Polychoroprene | 5.5% by weight |
| Chlorinated caoutchouc | 5.5% by weight |
| Terpene phenolic resin | 13.5% by weight |
| Silane | 1.0% by weight |
| Xylene | 47.0% by weight |
| Methylenechloride | 27.0% by weight |
| Carbon black | 0.5% by weight |

The used chlorinated caoutchouc is of an average molecular weight of approximately 85,000. The used terpene phenolic resin is of a ring-and-ball melting point of 93 to 97°C. The used silane is a compound of the formula $HSCH_2CH_2CH_2Si(OCH_3)_3$.

A modified bitumen enamel is produced by initially producing the following premix:

| | |
|---|---|
| Bitumen B. 60 | 88% by weight |
| Linear SBS | 7% by weight |
| Branched SBS | 5% by weight |

The linear SBS is a linear styrene-butadiene-styrene block copolymer with a styrene content of 30% by weight and of a molecular weight of approximately 140,000. The branched SBS is a branched styrene-butadiene-styrene block copolymer with a styrene content of 30% by weight and of a molecular weight of approximately 250,000.

By means of the above premix a bitumen enamel of the following composition is produced:

### Bitumen enamel

| | |
|---|---|
| Premix | 71% by weight |
| Polyolefin | 4% by weight |
| Filler | 25% by weight |

The used polyolefin is a mainly amorphous polyolefin produced by the low pressure method and in form of a copolymer of $\alpha$-olefines with a ball-and-ring value of 120 to 130°C. As filler a slate powder is used with a fineness ensuring a 100% passage through a 250 micrometer sieve and at least 93% passage through a 90 micrometer sieve.

Comparison Example A

Synthetic primer of the type B and conventional coal tar enamel 120/5 according to BS 4164: 1980

Comparison Example B

Synthetic primer of the type B and conventional bitumen enamel B according to BS 4147: 1980

Test I

The present test I was performed by CAPCIS, Corrosion and Protection Centre Industrial Services, University of Manchester Institute of Science and Technology, Manchester, England.

The samples produced according to Example 1 and the comparison Examples A and B were examined by way of comparison to determine the corrosion protecting properties and mechanical properties of the three coatings.

The tests were performed on steel plates coated at the laboratory in accordance with the guidelines stated in BS 4147 or BS 4164, and the tests were also performed in accordance with these standards whenever possible.

1. Materials and Test

The test plates with coal tar enamel and bitumen enamel were coated by way of flood-coating. The test plates had been cleaned in advance by way of steel sand blowing to a purity of Sa 2½ (Swedish Industry Standard (S.I.S.) No. 05 5900: which corresponds to a metallic, clean surface of a profile of 75 micrometer ± 25 micrometer, i.e. with a roughness where the "tops" were of an average height of 75 micrometer with a variation of ± 25 micrometer). The test plates were subsequently primed with a synthetic primer of the type B according to the respective standards for coal tar enamel and bitumen enamel, respectively. The primer stated in Example 1 was used for the plates coated in accordance with the present invention.

Tests were performed for cathodic disbonding, cf. BS 4164; and impact and bending tests in accordance with BS 4147 with additional tests at low temperature as stated.

2. Bending Test

Bending tests were performed in accordance with the method described in BS 4147 Appendix F on steel plates of the dimension 300 mm times 100 mm times 5 mm with a coating thickness of approximately 3 to 4 mm.

The test temperatures were 0°C; -10°C; -20°C; and -40°C, and the tests were performed as double tests. Prior to the testing, the plates for the tests at -30°C and 40°C were conditioned for 24 hours by means of a box at low temperature and by means of liquid nitrogen as coolant. The plates for the tests at 0°C; -10°C and -20°C were conditioned in a separate freezing unit at -20°C.

The bending tests were performed on a fully automatic Instron machine of a capacity of 10 t. The samples rested on knife edges of a radius of 3 mm at a regular interval of 240 mm with the coating facing downwards. A constant load was applied at 1 mm/sec. Holidays on the coating were continuously detected at 10 kV by means of an Elcometer 105. The plates were bent until the first crack appeared on the holyday detector.

The bending in mm at the first crack was noted. The test was performed as a double test. The results appear from Table 1.

## Table 1 Bending Test Results

| Coating | Test Temperature | Bending (mm) | Result |
|---|---|---|---|
| A | | 8.5 ; 6.0 | 7.25 mm cracked |
| B | 0°C | 70 ; 70 | 70 mm no cracks |
| Example 1 | | 70 ; 70 | 70 mm no cracks |
| A | | 15.5; 11.0 | 13.25 mm cracked |
| B | -10°C | 20.0; 17.5 | 18.25 mm cracked |
| Example 1 | | 70 ; 70 | 70 mm no cracks |
| A | | 6.0; 6.0 | 6 mm cracked |
| B | -20°C | 4.0; 4.5 | 4.25 mm cracked |
| Example 1 | | 13.0; 12.0 | 12.5 mm cracked |
| A | | 5.0; 4.5 | 4.75 mm cracked |
| B | -30°C | 4.5; 4.0 | 4.25 mm cracked |
| Example 1 | | 70 ; 70 | 70 mm no cracks |
| A | | 1.0 ; 1.0 | 1.0 mm cracked |
| B | -40°C | * | |
| Example 1 | | 12.0 ; 15.0 | 13.5 mm cracked |

* The coating had disbond the plate prior to the testing.

It appears from the results in Table 1 that the coating of Example 1 tolerated the bending test well.

At 0°C, -10°C and -30°C the plates were bent beyond the test limits without formation of cracks. At -40°C the sample of Example 1 proved to be considerably superior to both the coal tar sample and the asphalt sample, although the sample of Example 1 did form cracks, but not until subjected to an average bending of 14 mm which exceeds the degree of bending that a pipeline, i.e. both an offshore and an onshore pipeline, is subjected to in practice.

The results of the coating according to Example 1 at -20°C are surprisingly low. Nevertheless, cracks are not formed until the bending exceeds twice the bending of plates coated with coal tar or asphalt.

### 3. Impact Test

Impact tests were performed according to the method described in BS 4147 Appendix G on steel plates of the dimension 300 mm times 300 mm times 12.5 mm with a coating thickness of approximately 3 to 4 mm. The test temperatures were 0°C; -10°C; and -20°C. The test plates were conditioned in a freezing unit for the samples at -10°C and -20°C and in a refrigerator for the samples at 0°C.

The plates were examined immediately after each impact test for the presence of holidays by means of 10 kV on an Elcometer 105 detector so as to determine the degree of formation of cracks at the impact spot. It turned out to be very difficult to remove the disbond coating at -10°C and -20°C, as described in Appendix G.3 in BS 4147.

These plates were photographed. Attemps were made at setting off the cracks by means of talc powder, and the plates were left for 24 hours so as to achieve the room temperature. The degree of disbonding was subsequently determined by the method described in G.3 in BS 4147.

### Table 2 Impact Test

| Coating | Test Temp. | Cracks/10kV/radius from point of impact | Disbonding ($mm^2$) |
|---|---|---|---|
| A | | 15 mm | 2830 |
| B | 0°C | coating completely crushed at the effect of impact | |
| Example 1 | | no cracks | insignificant disbonding, approx. 314 |
| A | | 35 to 40 | 3318 |
| B | -10°C | coating completely crushed at the effect of impact | |
| Example 1 | | 25 mm | 3850 |
| A | | 30 mm | 6363 |
| B | -20°C | 30 mm | 13275 |
| Example 1 | | 30 mm | 7855 |

At -10°C and -20°C the coatings were too hard to disbond. These plates were allowed to return to room temperature, whereafter the disbonding was determined.

It appears from the results, that the bitumen enamel of Example 1 is superior to the known enamels at 0°C. At- 10°C and -20°C the bitumen enamel is superior to the asphalt enamel and comparable with coal tar enamel.

### 4. Cathodic Disbonding

Tests for cathodic disbonding were performed by the method described in BS 4164, Appendix N. The tests were performed as double tests on each sample plate and at room temperature (20 ± 5°C). The sample cells were potentiostatically polarized at -1500 millivolt, and the potential was controlled and adjusted daily during the tests. After 28 days, the coating of each plate was examined by means of the method described in BS 4164, Appendix N.4. The results appear from Table 3.

## Table 3 Cathodic Disbonding

On an average

| Test | Disbond length (mm) |
|------|---------------------|
| A | 10 |
| B | 11 |
| Example 1 | 3 |

A visual inspection after 28 days testing at -1500 millivolt revealed that no visible disbonding nor formation of blisters were found anywhere on the three coatings outside the exposure formed for the testing.

It appears from the results of Table 3, that the modified bitumen enamel according to the invention (Example 1) provides a substantially improved protection against corrosion, as the test revealed a cathodic disbonding of only 3 mm compared to 10 mm and 11 mm, respectively, for coal tar enamel and conventional bitumen enamel.

A measurement of the cathodic disbonding on fusion-bond epoxy powder (F.B.E.) was carried out by means of the same measuring equipment. The fusion-bond epoxy powder had been applied in the same manner as by conventional pipe joints onshore according to the guidelines of British Gas Corporation. The latter test revealed a 5 to 8 mm disbonding on two separate FBE systems.

Test II

The present Example illustrates a comparison by the so-called sag-test (slide test) according to BS 4147, Appendix E. By the test, bitumen enamel of Example 1 was compared with a conventional bitumen enamel containing bitumen 115/15 + 30% of filler.

## Table 5 SAG (mm)

| Temp. °C | Conventional bitumen enamel | Example 1 |
|----------|------------------------------|-----------|
| 75 | 1 | 0.5 |
| 80 | 3 | 0.5 |
| 85 | 5 | 3 |
| 90 | 6 | 4 |

The test shows that the modified bitumen enamel according to the invention (Example 1) possesses a far better resistance to sag at high temperatures than the conventional bitumen enamel.

Test III

The present Example illustrates further impact tests as described in Test I on the coating according to the invention dealt with in Example 1. The results appear from Table 6.

### Table 6 Impact Test

| Test temperature | Disbonding ($mm^2$) |
|---|---|
| -5 | 1600 |
| -10 | 3000 |
| -15 | 3000 |
| -20 | 6300 |

The results of the above test confirm that the modified bitumen enamel according to the invention reveals a low disbonding in connection with impacts, the indicated values being considerably lower than the values usually appearing in connection with conventional bitumen enamel.

Test IV

Further tests concerning cathodic disbonding at 25°C and 50°C were performed on the bitumen enamel according to the invention and of the composition stated in Example 1. The results appear from Table 7.

### Table 7 Cathodic Disbonding

| Days | Disbonding (mm) | |
|---|---|---|
| | 25°C | 50°C |
| 2 | 6 | 2 |
| 4 | 6 | 3 |
| 8 | 5 | 3 |
| 15 | 14 | 5 |

It appears that a surprisingly improved protection against corrosion is obtained by the method according to the invention at elevated temperatures.

Example 2

A primer is produced by solving and dispersing the components stated below by means of a dissolver and using a reflux condenser in order to avoid loss of solvents to the surroundings.

| | |
|---|---|
| Polychoroprene, Neoprene W | 5.5% by weight |
| Chlorinated caoutchouc, pergut S10 | 5.5% by weight |
| Terpene phenolic resin, ball-and-ring softening point 95°C | 13.5% by weight |
| Silane, $HSCH_2CH_2CH_2Si(OCH_3)_3$ | 1.0% by weight |
| Xylene | 47.0% by weight |
| Methylenechloride | 27.0% by weight |
| Carbon black | 0.5% by weight |

Carbon black is added to the homogenous solution of the remaining components and dispersed therein.

A bitumen enamel is produced by initially producing a basic primer mixture, where 88 parts by weight of bitumen B60 are intensively mixed by means of a high shear mixer, such as a Siefert mill, with 7 parts by weight of linear SBS (average molecular weight of approximately 140,000) and 5 parts by weight of branched SBS (average molecular weight of approximately 250,000), both latter components comtaining approximately 30% by weight of styrene, at a temperature of approximately 180°C.

The above primer mixture is subsequently admixed polyolefine with a ball-and-ring softening point of approximately 125°C (according to ASTM D36 or DIN 52011), penetration value 100/25/5 of approximately 12 (according to ASTM D5 or DIN 52010), and a breaking point Fraass of approximately -30°C (according to IP80 or DIN 52012). Pounded slate is added as filler in a horizontal padle mixer (positive mixer) (approximately 100 rpm) at approximately 180°C and with a mixing period ensuring a homogenous distribution and dispersion of the filler (approximately 1 hour).

The resulting composition of the bitumen enamel is subsequently as follows:

Bitumen B60        62.5% by weight
linear SBS         5.0% by weight
Branched SBS       3.5% by weight
Polyolefine        4.0% by weight
Pounded slate      25.0% by weight

The pipes to be corrosion-protected must be completely cleaned for fat and oil prior to the application of the primer. In addition, the pipes must have been subjected to a steel/sand-blowing to at least SIS-0.5·59·00 Sa 2½ processing (cf. BS 7079).

The primer is applied to the cleaned pipes no later than two hours after the steel/sand-blowing, i.e. abrassive blasting, or a chemical cleaning and onto a dry surface at 7°C and above the dew point of the surrounding air. It is preferred to perform the application at 30 to 40°C and a drying in a room free of dust and moisture. After drying of the primer, the bitumen enamel is applied by means of the particularly developed application apparatus at approximately 180°C in a plant ensuring in a conventional manner an advancing and rotation of the pipes. The bitumen enamel is applied by feeding the exact quantity to form a layer of a thickness of 4 mm, which corresponds to two thirds of the necessary thickness of conventional tar or bitumen enamels. Accordingly, the reduced thickness ensures both advantages and a reduced consumption of enamel. Simultaneously with the application of bitumen enamel at approximately 180°C, the pipes are wound with a wrapping material of polyester felt and polyester tissue, i.e. not the conventionally used glass felt or glass tissue. The wrapping material is produced in the manner conventionally used for the production of wrapping materials with the exception that a polyester tissue-reinforced polyester felt is used as reinforcement instead of the conventionally used glass felt (glass tissue). In addition, bitumen enamel is used for the impregnation of the wrapping material. In this manner it is ensured that the good properties of the bitumen enamel can be competely utilized, and no compatibility problems arise, and a particularly good protection of the coating is obtained. The used wrapping material presents the following data:

```
Weight;                              approximately 650 g/m²
Weight of reinforcement,
polyester felt/polyester tissue;     approximately 95 g/m²
Tensile strength, longitudinally
and cross-sectionally;           approximately 380 N/50 mm
Extension at breaks, longitudinally
and cross-sectionally;               approximately 25%.
```

The use of the particular wrapping material ensures a simultaneous achievement of a good strength and a good protection of the coating and far better bending and cold properties than those obtained by means of conventional glass felt reinforcement. After completion of the application, the pipe is suited for all purposes onshore, whereas an offshore use usually requires an additional application of such an amount of concrete that the pipe will remain on the bottom of the sea, even when it has been emptied for the fluid usually transported therein. A pipe produced in accordance with the present Example possesses the properties stated in Example 1. Tests on the ready-made pipe have furthermore revealed exceptionally good results compared to very advanced solutions, such as fusion-bond epoxy (FBE) and polyethylene coatings (PEC). Cathodic disbonding reveals the following results for the modified bitumen enamel applied by the method according to the invention, (MBPP) fusion-bond epoxy (FBE), and polyethylene coatings (PEC), respectively:

Cathodic disbonding from pipes of an original hole of 6 mm:

MBPP   2 mm
FBE    3 mm
PEC    11 mm

```
Impact test, ASTM D14:          MBPP        FBE         PEC
   0°C                   : > 17 joule   8.8 joule   > 17 joule
  -10°C                  : > 17 joule   5.1 joule   total dis-
                                                    bonding.
```

**Claims**

1.  A method of protecting materials against corrosion including the steps of priming with a primer, coating with a modified bitumen enamel, wrapping in a wrapping material and optionally applying a concrete coating, **characterised** by priming with a primer containing 3 to 20% by weight of phenol-modified resin and 0.1 to 5% by weight of silane, and by using as bitumen enamel a bitumen being modified with one or more polymers selected among vinyl-butadiene block polymers optionally combined with polyolefines in a total polymer quantity of 6 to 18% by weight calculated on the total quantity of bitumen and polymer.

2.  A method as claimed in claim 1, **characterised** by using a bitumen enamel modified by 7 to 16% by weight of polymer calculated on the total quantity of bitumen and polymer.

3.  A method as claimed in claim 2, **characterised** by a polymer quantity of 8 to 14% by weight calculated on the total quantity of bitumen and polymer.

4.  A method as claimed in claim 1, **characterised** by the bitumen enamel being modified by 4 to 12% by weight of vinyl-butadiene block polymer and 2 to 6% by weight of polyolefin calculated on the total quantity of bitumen and polymer.

5.  A method as claimed in claim 4, **characterised** by using as vinyl-butadiene block polymer a mixture of linear and branched vinyl-butadiene block polyer in the weight ratio 0.7:1 to 3:1.

6.  A method as claimed in claim 1, **characterised** by using styrene-butadiene-styrene block polymer as the vinyl-butadiene block polymer.

7.  A method as claimed in claim 1, **characterised** by using amorphous polyolefin as the polyolefin.

8.  A method as claimed in claim 1, **characterised** by the used primer containing 6 to 18% by weight of phenol-modified resin and 0.4 to 2% by weight of silane.

9.  A method as claimed in claim 8, **characterised** by the primer containing 10 to 16% by weight of phenol-modified resin and 0.5 to 1.2% by weight of silane.

10. A method as claimed in claim 1, **characterised** by the phenol-modified resin being a terpene phenolic resin or a t-butyl phenolic resin.

11. A method as claimed in claim 1, **characterised** by the silane being gamma-mercaptopropyltrimethoxysilane or gamma-methacryloxypropyltrimethoxysilane.

12. A method as claimed in claim 1, **characterised** by the bitumen used as starting material for the production of the used bitumen enamel having a penetration value between 5 and 500, preferably between 20 and 80, particularly preferred between 50 and 80.

13. A method as claimed in claim 1, **characterised** by wrapping with a wrapping material based on a combination of a layer of polyester felt and a layer of polyester tissue, where the felt side faces the material to be protected against corrosion.

14. A method as claimed in claim 1, **characterised** by applying the wrapping material in form of a single layer.

15. A method as claimed in claim 1 for protecting pipes against corrosion, **characterised** by applying the bitumen enamel from a channel-shaped closed container with one or more aligned holes placed above and parallel to the rotating pipe, said pipe being advanced in its axial direction, where a substantially constant overpressure is kept inside the container as well as a substantially constant temperature adapted to the temperature of the pipe in such a manner that the bitumen enamel upon contact with the pipe hardens to such an extent that the entire quantity of bitumen enamel bonds to the pipe.

16. An apparatus for carrying out the method as claimed in claim 15, **characterised** by comprising a channel-shaped closed container with one or more aligned holes, said channel-shaped container forming part of a circuit including in the flow direction after the container a first pump, a reservoir tank with a stirrer and a heating unit, and a second pump, where the second pump pumping bitumen into the container and the first pump pumping bitumen out of said container are mutually controlled in such a manner that the pressure inside the container is kept substantially constant.


**Patentansprüche**

1. Verfahren zum Korrosionsschutz von Materialien, umfassend die Stufen des Grundierens mit einem Grundiermittel, Beschichten mit einem modifizierten Bitumen-Lacküberzug, Umhüllen in einem Umhüllungsmaterial und wahlweise Anwendung einer Beton-Beschichtung, dadurch gekennzeichnet, daß mit einem Grundiermittel grundiert wird, das 3 bis 20 Gew.-% eines Phenol-modifizierten Harzes und 0,1 bis 5 Gew.-% Silan enthält und daß als Bitumen-Lacküberzug ein Bitumen verwendet wird, das mit einem oder mehreren Polymeren modifiziert ist, ausgewählt aus Vinyl-Butadien-Blockpolymeren, wahlweise kombiniert mit Polyolefinen in einer Polymer-Gesamtmenge von 6 bis 18 Gew.-%, berechnet auf die Gesamtmenge des Bitumens und Polymers.

2. Verfahren gemäß Anspruch 1, dadurch gekennzeichnet, daß ein Bitumen-Lacküberzug verwendet wird, das mit 7 bis 16 Gew.-% des Polymers, berechnet auf die Gesamtmenge des Bitumens und Polymers, modifiziert ist.

3. Verfahren gemäß Anspruch 2, gekennzeichnet, durch eine Polymer-Menge von 8 bis 14 Gew.-%, berechnet auf die Gesamtmenge des Bitumens und Polymers.

4. Verfahren gemäß Anspruch 1, dadurch gekennzeichnet, daß der Bitumen-Lacküberzug durch 4 bis 12 Gew.-% Vinyl-Butadien-Blockpolymer und 2 bis 6 Gew.-% Polyolefin, berechnet auf die Gesamtmenge des Bitumens und Polymers, modifiziert ist.

5. Verfahren gemäß Anspruch 4, dadurch gekennzeichnet, daß als Vinyl-Butadien-Blockpolymer eine Mischung aus linearem und verzweigtem Vinyl-Butadien-Blockpolymer in dem Gewichtsverhältnis von 0,7:1 bis 3:1 verwendet wird.

6. Verfahren gemäß Anspruch 1, dadurch gekennzeichnet, daß als das Vinyl-Butadien-Blockpolymer Styrol-Butadien-Styrol-Blockpolymer verwendet wird.

7. Verfahren gemäß Anspruch 1, dadurch gekennzeichnet, daß als das Polyolefin amorphes Polyolefin verwendet wird.

8. Verfahren gemäß Anspruch 1, dadurch gekennzeichnet, daß das verwendete Grundiermittel 6 bis 18 Gew.-% Phenolmodifiziertes Harz und 0,5 bis 1,2 Gew.-% Silan enthält.

9. Verfahren gemäß Anspruch 8, dadurch gekennzeichnet, daß das Grundiermittel 10 bis 16 Gew.-% Phenol-modifiziertes Harz und 0,5 bis 1,2 Gew.-% Silan enthält.

**10.** Verfahren gemäß Anspruch 1, dadurch gekennzeichnet, daß das Phenol-modifizierte Harz ein Terpen-Phenol-Harz oder ein t-Butyl-Phenol-Harz ist.

**11.** Verfahren gemäß Anspruch 1, dadurch gekennzeichnet, daß das Silan γ-Mercaptopropyltrimethoxy-Silan oder γ-Methacryloxypropyltrimethoxy-Silan ist.

**12.** Verfahren gemäß Anspruch 1, dadurch gekennzeichnet, daß das als Ausgangsmaterial für die Herstellung des verwendeten Bitumen-Lacküberzugs verwendete Bitumen einen Penetrationsindex von 5 bis 500, vorzugsweise von 20 bis 80 und insbesondere bevorzugt von 50 bis 80 hat.

**13.** Verfahren gemäß Anspruch 1, gekennzeichnet durch Umhüllen mit einem Umhüllungsmaterial auf der Grundlage einer Kombination einer Schicht aus Polyester-Filz und einer Schicht aus Polyester-Gewebe, wobei die Filzseite dem gegenüber Korrosion zu schützenden Material gegenüberliegt.

**14.** Verfahren gemäß Anspruch 1, gekennzeichnet durch Anwendung des Umhüllungsmaterials in Form einer einzelnen Schicht.

**15.** Verfahren gemäß Anspruch 1 zum Schutz von Röhren gegenüber Korrosion, gekennzeichnet durch Anwendung des Bitumen-Lacküberzugs aus einem geschlossenen, röhrenförmigen Behälter mit einem oder mehreren ausgerichteten Löchern, die oberhalb und parallel zu dem rotierenden Rohr angebracht sind, wobei dieses Rohr in seiner axialen Richtung vorwärts bewegt wird, wobei ein im wesentlichen konstanter Überdruck in dem Behälter sowie eine im wesentlichen konstante Temperatur eingehalten werden, die an die Temperatur des Rohrs auf derartige Weise angepaßt ist, daß der Bitumen-Lacküberzug beim Kontakt mit dem Rohr bis zu einem solchen Maße härtet, daß die Gesamtmenge an Bitumen-Lacküberzug an das Rohr bindet.

**16.** Vorrichtung zur Durchführung des Verfahrens gemäß Anspruch 15, dadurch gekennzeichnet, daß sie einen geschlossenen, röhrenförmigen Behälter mit einem oder mehreren ausgerichteten Löchern umfaßt, wobei der röhrenförmige Behälter Teil eines Kreislaufs bildet, der in der Fließrichtung nach dem Behälter eine erste Pumpe, einen Vorratsbehälter mit einem Rührer und eine Heizeinheit und eine zweite Pumpe einschließt, wobei die zweite Pumpe, die Bitumen in den Behälter pumpt und die erste Pumpe, die Bitumen aus dem Behälter pumpt, gegenseitig auf derartige Weise gesteuert werden, daß der Druck in dem Behälter im wesentlichen konstant bleibt.

## Revendications

**1.** Procédé permettant de protéger des matériaux contre la corrosion, comprenant les étapes d'application d'une couche d'apprêt, de revêtement avec un vernis de bitume modifié, d'enveloppement dans un matériau d'enveloppement, et éventuellement, d'application d'un revêtement de béton, **caractérisé** en ce que l'on applique une couche d'un apprêt contenant de 3 à 20 % en poids d'une résine modifiée par un phénol et de 0,1 à 5 % en poids d'un silane, et en ce que l'on utilise, en tant que vernis de bitume, un bitume modifié avec un ou plusieurs polymères choisis parmi les copolymères séquencés de butadiène et de monomère vinylique, éventuellement combinés avec des polyoléfines, et employés en une quantité totale de polymères de 6 à 18 % en poids par rapport à la quantité totale de bitume et de polymères.

**2.** Procédé conforme à la revendication 1, **caractérisé** en ce que l'on utilise un vernis de bitume modifié avec de 7 à 16 % en poids de polymères, par rapport à la quantité totale de bitume et de polymères.

**3.** Procédé conforme à la revendication 2, **caractérisé** en ce que la quantité de polymères vaut de 8 à 14 % en poids, par rapport à la quantité totale de bitume et de polymères.

**4.** Procédé conforme à la revendication 1, **caractérisé** en ce que le vernis de bitume est modifié avec 4 à 12 % en poids d'un copolymère séquencé de butadiène et de monomère vinylique et avec de 2 à 6 % en poids d'une polyoléfine, par rapport à la quantité totale de bitume et de polymères.

**5.** Procédé conforme à la revendication 4, **caractérisé** en ce que l'on utilise, en tant que copolymère séquencé de butadiène et de monomère vinylique, un mélange de copolymères séquencés linéaires et ramifiés de butadiène et de monomère vinylique, en un rapport pondéral de 0,7/1 à 3/1.

6. Procédé conforme à la revendication 1, **caractérisé** en ce que l'on emploie un copolymère séquencé styrène-butadiène-styrène, en tant que copolymère séquencé de butadiène et de monomère vinylique.

7. Procédé conforme à la revendication 1, **caractérisé** en ce que l'on utilise une polyoléfine amorphe, en tant que polyoléfine.

8. Procédé conforme à la revendication 1, **caractérisé** en ce que l'apprêt utilisé contient de 6 à 18 % en poids de résine modifiée par un phénol et de 0,4 à 2 % en poids d'un silane.

9. Procédé conforme à la revendication 8, **caractérisé** en ce que l'apprêt contient de 10 à 16 % en poids de résine modifiée par un phénol et de 0,5 à 1,2 % en poids d'un silane.

10. Procédé conforme à la revendication 1, **caractérisé** en ce que la résine modifiée par un phénol est une résine terpène-phénolique ou une résine t-butyl-phénolique.

11. Procédé conforme à la revendication 1, **caractérisé** en ce que le silane est du gamma-mercaptopropyl-triméthoxysilane ou du gamma-méthacryloxypropyl-triméthoxysilane.

12. Procédé conforme à la revendication 1, **caractérisé** en ce que le bitume utilisé comme produit de départ pour produire le vernis de bitume employé présente un indice de pénétration situé entre 5 et 500, de préférence entre 20 et 80, et mieux encore, entre 50 et 80.

13. Procédé conforme à la revendication 1, **caractérisé** en ce que l'on effectue l'enveloppement avec un matériau d'enveloppement constitué d'une combinaison d'une couche de feutre de polyester et d'une couche de tissu de polyester, la couche de feutre de polyester étant tournée vers le matériau que l'on veut protéger contre la corrosion.

14. Procédé conforme à la revendication 1, **caractérisé** en ce que l'on applique le matériau d'enveloppement sous la forme d'une seule couche.

15. Procédé conforme à la revendication 1, permettant de protéger des tuyaux contre la corrosion, **caractérisé** en ce que l'on applique le vernis de bitume en le faisant sortir d'un récipient fermé en forme de canal et présentant un trou ou plusieurs trous, situés au-dessus du tuyau en rotation et alignés parallèlement à celui-ci, tout en faisant avancer ledit tuyau dans la direction de son axe, et en maintenant à l'intérieur du récipient une surpression pratiquement constante ainsi qu'une température pratiquement constante, accordée à la température du tuyau de telle sorte que le vernis de bitume, après être entré en contact avec le tuyau, durcit à un degré tel que tout le vernis de bitume se fixe sur le tuyau.

16. Appareillage permettant de mettre en oeuvre le procédé conforme à la revendication 15, **caractérisé** en ce qu'il comporte un récipient fermé en forme de canal, présentant un trou ou plusieurs trous alignés, ledit récipient en forme de canal constituant une partie d'un circuit comprenant, dans le sens de l'écoulement, après le récipient, une première pompe, une cuve-réservoir équipée d'un agitateur et d'un dispositif de chauffage, et une seconde pompe, cette seconde pompe qui envoie le bitume dans le récipient et la première pompe qui fait sortir le bitume du récipient étant conjointement commandées de telle manière que la pression régnant à l'intérieur du récipient soit maintenue pratiquement constante.